# EUROPEAN PATENT APPLICATION

(11) **EP 3 128 238 A1**
(43) Date of publication of application: **08.02.2017**
(21) Application number: 15179770.1
(22) Date of filing: 05.08.2015
(51) Int. Cl.: F23N 5/24, F23R 3/28

(54) **INTELLIGENT CONTROL OF COMBUSTION WITH TIME SERIES AND BY-PASS FILTERS**

(71) Applicant: Siemens Aktiengesellschaft, 80333 München (DE)
(72) Inventor: Bulat, Ghenadie, Lincoln, LN6 8BD (GB); Dolmansley, Timothy, Shireoaks, Worksop, S81 8NA (GB)
(74) Representative: Maier, Daniel Oliver

(57) **Abstract**

The present invention describes a method for predicting a combustion error type of a combustion flame burning in a combustion chamber of the combustion system for a gas turbine engine. A raw signal of an error parameter (e.g. pressure, temperature) of the combustion flame (102) within a predefined time span is measured, wherein the error parameter is adapted for determining the combustion error type. At least one predefined frequency range from the raw signal is extracted by using a by-pass filter, so that the raw signal is decomposed. The number of peaks of the at least one predefined frequency range within the time span is counted. An actual reference value is determined by dividing the number of counted peaks by the time span. The actual reference value is compared with a nominal reference value, wherein the nominal reference value is determined by dividing a predefined number of peaks of the at least one predefined frequency range by the time span, so that the combustion error type is predictable if the actual reference value differs to the nominal reference value.

## Description

### Field of the invention

The present invention relates to a method for predicting a combustion error type of a combustion flame burning in a combustion chamber of the combustion system for a gas turbine engine. Furthermore, the present invention relates to a combustion system for a gas turbine engine.

### Art background

Control methods for a combustion system for a gas turbine engine are known which avoid high metal temperatures and high dynamics, whilst increasing engine reliability with lowest NOx production. The NOx emissions of the DLE (Dry Low Emission) technology are dependent of the fuel placement and it is adjusted by control of fuel ratio.

WO 2007/082608 discloses a combustion apparatus including an incoming fuel supply line, which supplies fuel in a plurality of fuel-supply lines to one or more burners. A burner comprises a combustion volume. A temperature sensor is located in the apparatus so as to yield temperature information relating to a component part of the apparatus, which is to be prevented from overheating. The apparatus also includes a control arrangement, which detects the temperature-sensor output and, depending on that output, varies the fuel supplies to one or more of the burners in such a way as to maintain the temperature of the component part below a maximum value, while keeping the fuel in the incoming fuel supply line substantially constant. The control unit also strives to adjust the operating conditions of the apparatus so that pressure oscillations are kept below a maximum value.

WO 2011/042037 A1 discloses a combustion apparatus with a control arrangement arranged to vary the fuel supplies to one or more burners based on temperature information and on pressure information and on a further information. The further information is indicative for a progress over time for a signal for a time span defined by a time information, such as to maintain the temperature of a desired part to be protected below a predetermined maximum temperature limit and such as to keep the pressure variations within the combustion volume below a predetermined maximum pressure variation limit, while keeping the overall fuel supply in the fuel supply line to the apparatus substantially constant.

In an engine the combustion system is sensitive to changes in certain parameters. For example, low frequency combustion dynamics are often seen prior to flame blow off. If this frequency is observed the fuel mixture or other parameter can be modified to anchor the flame. Each combustion system has certain instability points or non-desirable flame locations (leading to high burner temperatures and component failure). Movement of the flame often has a combustion dynamic signal that is related to this change. There are also methods which can anchor or move the flame position back to a safe region. Once the effect is observed, a dynamic signal found which is associated with it and a parameter which can be adjusted to control this effect is identified then an intelligent control system can be developed to automatically control this effect.

Currently the dynamic pressure data is collected from a piezo-electric transducer as an mV/mbar signal over time. The time signal is analyzed in a monitoring card (e.g. part of the Engine Control unit) which is build up by several periodic signals meaning repeated modal behavior with individual and various amplitudes.

The time signal is assumed to be consisting of several periodic behaviors. The Fast Fourier Transform (FFT) could then be performed on the signal and this frequency is then used within the intelligent control system.

This calculation transforms the time data to frequency data. Looking at the frequency spectra, some of the important information on the behavior of the monitored object can be determined. The information (amplitude, acoustic energy or power) from each frequency band is then used to monitor operation of the engine. A check against the limit on the amplitude then may determine the Engine control to take corrective actions (such as change in fuel placement or engine load reduction or shut-down) or to continue the operation. For combustion dynamics the pressure behavior is usually not very periodic as compared to vibration comportment.

Because the behaviour of the time signal combustion dynamics is usually not periodic, the existing method could therefore miss the onset of combustion instability and leaving the user (or the control system) to react to the combustion dynamics rather than preventing it in advance or avoid the gas turbine operation in the first place.

### Summary of the invention

It may be an object of the present invention to provide a method for predicting an onset of a combustion error type of a combustion flame burning in a combustion chamber of the combustion system.

In order to achieve the object defined above, a method for predicting a combustion error type of a combustion flame burning in a combustion chamber of the combustion system for a gas turbine engine and a combustion system for a gas turbine engine according to the independent claims is presented.

According to a first exemplary embodiment a method for predicting a combustion error type of a combustion flame burning in a combustion chamber of the combustion system for a gas turbine engine is presented.

According to the method, a raw signal (i.e. a time domain signal) of an error parameter (e.g. pressure, temperature) of the combustion flame is measured within a predetermined time span, wherein the error parameter is adapted for determining the combustion error type (e.g. fretting).

Next, at least one predefined frequency range from the raw signal by using at least one by-pass filter is extracted, so that the raw signal is decomposed,

A number of peaks of the at least one predefined frequency within the time span is counted.

An actual reference value is determined by dividing the number of counted peaks by the time span.

The actual reference value is compared with a nominal reference value. The nominal reference value is determined by dividing a predefined number of peaks of the at least one predefined frequency range by the time span, so that the combustion error type is predictable if the actual reference value differs to the nominal reference value by a predefined amount (range).

A combustion chamber of the combustion system comprises e.g. a pre-combustion zone and a main combustion chamber. The combustion flame occurs in the pre-combustion zone and the main combustion chamber. A fuel is split with a controllable pilot fuel/main fuel ratio into a pilot fuel mass flow and a main fuel mass flow. The pilot fuel is injected at a pilot burner inside the pre-combustion zone. The main fuel is injected together with the air through a swirler prior to the pre-combustion zone. The pilot fuel is generally richer fuel for maintaining and controlling a stable flame inside the combustion chamber. The main fuel is generally leaner than the pilot fuel in order to ensure an optimum burning characteristic, i.e. with low emissions, such as NOx.

Depending on e.g. the load of the gas turbine and the pilot fuel/main fuel ratio, combustion error types of the combustion flame may occur. A combustion error types may be for example fretting of the combustion flame, a blow out of the combustion flame or a resonant frequency of the combustion flame.

Each combustion error type may be determined on its individual error parameter. In particular, an oscillation pattern of an error parameter (i.e. the frequency of the error parameter) may be indicative for a certain combustion error type.

The error parameter may be for example a combustion pressure of the combustion flame or a combustion temperature of the combustion flame. In particular, the error parameter may be a pattern of hot spots of a combustion chamber wall heated by the combustion flame within the combustion chamber, for example.

According to the invention, a raw signal (for example a predefined frequency range of the raw signal) of the error parameter is measured. The raw signal may be a signal of a frequency, for example. A predefined frequency range is extracted from the raw signal by using the by-pass filters (e.g. one on each side of the frequency range), so that the raw signal is decomposed. Each error combustion error type can be detected on the basis of a specific predefined frequency extracted from a measured frequency spectrum of an error parameter. For example, if the error parameter is the pressure of the combustion flame, the oscillation of the pressure defines the predefined frequency spectrum. For example, if the error parameter is the location of temperature maxima of the combustion flame, the oscillation of the location of temperature maxima of the combustion flame defines the predefined frequency spectrum.

If e.g. fretting of the combustion flame occurs, a certain behaviour (e.g. amplitude, frequency pattern etc.) of a specific predefined frequency of the frequency pattern exists. Specifically, a number of peaks within the time span of the predefined frequency are indicative of a behaviour of an combustion error type.

The actual reference value represents the peaks measured within a time span independently from any periodic behaviours of the frequency. A peak may be defined as a local maximum of a value of an amplitude of the predefined frequency. The value of the amplitude forming a local maximum may be defined in advance.

For example, if a value of the amplitude exceeds a predefined threshold value, each exceeding of the threshold value forms a peak to be counted. The peaks may be counted, if a local maximum of the amplitude is reached and the local maximum is above the threshold value. Each local maximum forming a peak is counted within the time span.

The nominal reference value represents the predefined number of peaks of an amplitude of a predefined frequency range within the time span. The nominal reference value refers to a number of peaks within the time span which are predetermined e.g. under laboratory conditions. The nominal reference value determines a threshold value, wherein a reference value below the nominal reference value is indicative of stable operation of the gas turbine, i.e. where the risk of occurrence of the respective combustion error type is low. A reference value above the nominal reference value is indicative of an instable operation of the gas turbine, i.e. where the risk of occurrence of the respective combustion error type increases rapidly or is high.

The nominal reference value may be stored in a data basis in a storage unit, for example. Furthermore, a plurality of nominal reference values for certain operating states and error parameter (e.g. pressure, temperature) may be stored and used to predict a combustion error type.

According to the invention, the respective combustion error type is predicted, if the actual reference value differs to the nominal reference value. For example, if the actual reference value exceeds the nominal reference value, a respective combustion error type is predicted. Furthermore, a range from the nominal reference value may be defined, so that a respective combustion error type is predicted if the actual reference value exceeds the nominal reference value by a predefined threshold value and/or by a predefined threshold time span.

If a periodic behaviour of the frequency pattern is determined according to a conventional approach, almost no time for preventing the combustion error type exists, because waiting is necessary until a periodicity can be determined. Hence, it takes a long time until a periodicity of the frequency can be measured and thus the reaction time for preventing the combustion error type reduces as well. Hence, by the approach of the present invention, the at least one predefined frequency from the raw signal is presented (e.g. by statistic methods as described below) by an actual reference value of the predefined frequency of the error parameter independently of any periodic behaviours. The actual reference value represents the peaks within a certain time span independently from any periodic behaviours of the frequency. If the number of peaks within a time span is critical, control operations can be done already before a certain periodicity of the signal is measured. In other words, the time span is independent from any periodic characteristics of the predefined frequency.

By presenting the behaviour of the predefined frequency from the raw signal with the above described actual and nominal reference values, it is possible to detect already an onset of a combustion error type and it is no longer necessary to measure over a long time span the frequency until a known periodicity of the frequency occurs which is indicative of a combustion error type.

By presenting the predefined frequency from the raw signal with an actual reference value, a typical behaviour of a combustion error type at an onset, i.e. at the start of the combustion error type is determinable and hence the combustion error type is better predictable.

According to a further exemplary embodiment of the present invention, a control parameter which is adapted for controlling the combustion flame error parameter of the combustion flame is controlled so that the actual reference value meets the limit of the nominal reference value and so that the risk of a combustion error type is reduced.

The control parameter is for example a main fuel/pilot fuel split ratio injected into the combustion chamber or a general mass flow of the fuel into the combustion chamber. The control parameter could also be a control of the amount of bleed of compressor air of the gas turbine, a control of the Variable Guide Vane (VGV) position of the gas turbine or engine speed of the gas turbine.

In the following, an example of a statistic method is described in order to present the reference values of the at least one predefined frequency from the raw signal of the error parameter:
For example, a statistic method using a calculation of a Hurst exponent functioning as the nominal and actual reference value may be applied.

The time span, within which the peaks are measured, may be presented as a fractal time series of the predefined frequency. The nominal fractal time series can be determined under laboratory condition, e.g. by conducting several test cycles of a gas turbine in a laboratory and measuring at which nominal fractal time series of the predefined frequency an onset of a specific combustion error type may occur.

By the fractal time series the Hurst exponent may be determined. An actual Hurst exponent (i.e. actual reference value) is determined by dividing the actual fractal time series with the counted peaks within the time span. The nominal Hurst exponent is indicative for an operating condition, where an onset of the combustion error type exists.

The nominal Hurst exponent can be determined under laboratory condition, e.g. by conducting several test cycles of a gas turbine in a laboratory. The data for nominal Hurst exponents can be stored in a data basis.

The actual Hurst exponent is compared with the nominal Hurst exponent, so that the combustion error type is predictable if the actual Hurst exponent matches with the nominal Hurst exponent.

A further improvement on the control and functionality of the control method is described in this invention with the emphasis on the signal analysis thus improving the reliability and predictive capability of the combustion dynamics readings.

According to a further aspect of the present invention, a combustion system for a gas turbine engine is presented, which is suitable for applying the method described above. The combustion system comprises a measuring unit configured for measuring a raw signal of an error parameter of a combustion flame burning in a combustion chamber of the combustion system. The error parameter is adapted for determining a combustion error type. At least one by-pass filter for extracting at least one predefined frequency range from the raw signal is provided, so that the raw signal is decomposed. The combustion system further comprises a counting unit for counting a number peaks of the at least one predefined frequency within the time span and a determining unit for determining an actual reference value by dividing the number of counted peaks by the time span. The combustion system further comprises a comparing unit for comparing the actual reference value with a nominal reference value, wherein the nominal reference value is determined by dividing a predefined number of peaks of the at least one predefined frequency by the time span, so that the combustion error type is predictable if the actual reference value differs to the nominal reference value by a predefined amount.

The above-described units, such as the counting unit, the comparing unit and the determination unit may comprise a microprocessor for processing the received data. The counting unit, the determination unit and the comparing unit maybe arranged together in one common housing or maybe arranged spaced apart from each other. Furthermore, a data basis unit may be connected to the respective units, such as the counting unit, the determination unit and the/or the comparing unit for storing and receiving external or nominal data.

The above described units may be part of an (engine) control unit of the combustion system. The control unit accordingly conducts the steps of the above described method. Additionally, the control unit controls e.g. the actions for driving the combustion chamber and in particular to prevent combustion error types. Therefore, the control unit may be connected to operating units, such as a fuel control unit, for example a controllable valve, which controls the fuel supply into the combustion chamber. In particular fuel control unit controls the main fuel/pilot fuel ratio.

The measuring unit may be for example a temperature sensor, a pressure sensor, an optical sensor and/or a sound sensor. The measuring unit may comprise for example pressure sensors for measuring a pressure oscillation of the combustion flame or temperature sensors for measuring hot spots and a temperature pattern of the combustion flame. The temperature sensor measures the temperature of the hot products, i.e. the exhaust gas, inside the combustion chamber. The temperature sensor is for example arranged closed to or at the hottest location inside the combustion chamber or is located further downstream of the combustion chamber.

Summarizing, it is an aim of the present invention to improve the capability of the signal analysis related to the combustion dynamics measurement inside the combustion chamber. The method comprises statistical analysis on the raw signal coupled with a by-pass (or cut-off) filter to determine fractal time series.

An undesirable combustion feature, i.e. the combustion error type (fretting, blow out of flame, resonant frequency associated with system), is to be prevented. The onset conditions of the undesirable combustion feature are known and the nominal values e.g. the nominal fractal time series is known.

A combustion dynamics raw signal of the error parameter (pressure, temperature) which occurs when the combustion feature is present is measured. As described above by statistical calculation methods an actual fractal time series of the measured error parameter is determined. A comparison between the actual fractal time series and the nominal fractal time series determines an onset of an undesirable combustion feature. As a result of the comparison, the combustion chamber can be controlled such that undesirable combustion feature can be controlled.

An example of a combustion error type is lean blow off, where a low pressure frequency is observed and the lean blow off limit is reached. This combustion error type can be controlled by adjusting the fuel splits to the burners (or increasing the fuel flow).

According to the inventive method, a raw signal of a frequency spectrum of an error parameter of the combustion flame is used in conjunction with the use of by-pass (cut-off) filters so that the measured raw signal is decomposed and represented as actual fractal time series.

A fractal time series also displays a property known as 'scale invariance', which means that features of the signal look the same on many different scales of observation (differing seconds/ minutes/hours).

A statistical method based on the standard deviation of the raw dynamics signal (fractal time series of pressure) can be used to predict the onset of the combustion instability (i.e. the undesirable combustion feature, the combustion error type) associated within the cut-off range of the frequency of the raw signal. An example of this is the standard deviation of the measurement (fractal time series of pressure) divided by the time, which is the Hurst exponent.

The range of interest is defined by using cut-off filters and then the Hurst exponent is used to determine the stability of the system corresponding to that range. This will be achieved by check on the value of the Hurst exponent against a predefined limit of the Hurst exponent. Several predefined limits could be used so that a warning or an action is then taken depending on the actual limit of the Hurst exponent.

A typical value under H (Hurst exponent) <0.5 would indicate that the system becomes unstable, H<0.3 could be used a warning trigger, whilst the H<0.15 may be used as a corrective action. The corrective action would depend on the range of frequencies studied. The control action could include fuel placement modification or fuel split adjustment between burners (closing the loop on the intelligent control). This type of control is typical on the low frequency ranges or during engine load changes or shut down. The corrective action could also mean the change in the amount of bleed of compressor air, VGV (Variable Guide Vane) position or engine speed.

By the approach of the present invention, a statistical approach of the time series combined with cut-off filters is introduced. The proposed method would use all existing information from the fractal time series (will not assume periodicity) to determine the stability of the measured system.

The advantage lays in the improved and more rapid response in the combustion dynamics monitoring. The corrective actions taken as a result of the method would enable the engine to operate in conditions that were previously considered not acceptable by the control system. Lower NOx could be achieved if this method is coupled to the latest intelligent control methodology.

The predictive capability of the engine operation would be enhanced and thus resulting in allowing the user to manually change the engine running regime prior to the onset of combustion instability rather that reacting to it.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

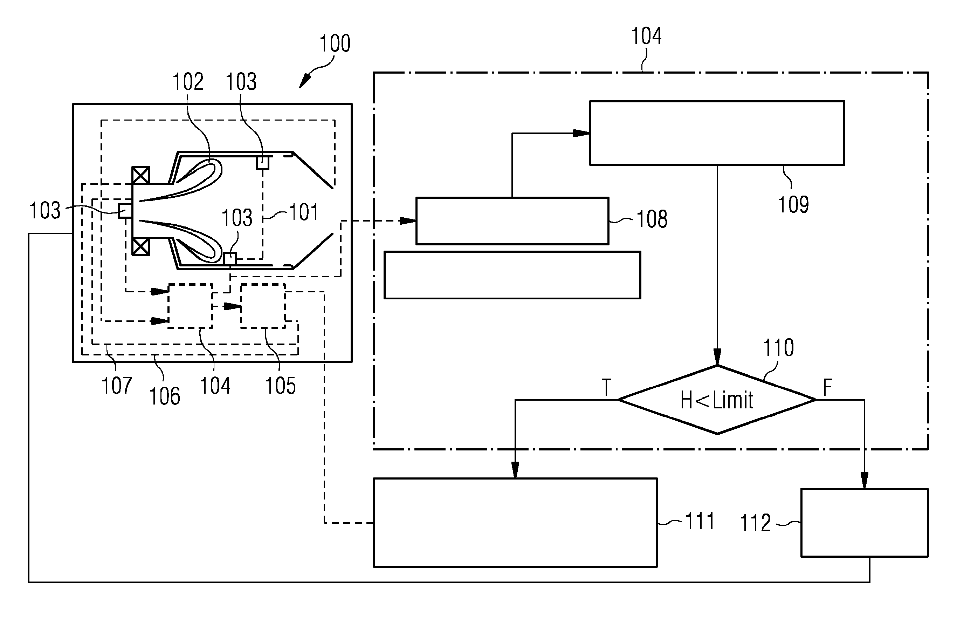

The Figure shows a schematical view of a combustion system for a gas turbine engine and a method for predicting a combustion error type according to an exemplary embodiment of the present invention.

### Detailed Description

The illustrations in the drawings are schematically. It is noted that in different figures, similar or identical elements are provided with the same reference signs.

The Figure shows a schematical view of a combustion system for a gas turbine engine and a method for predicting a combustion error type according to an exemplary embodiment of the present invention.

In particular, in the Figure, a combustion system 100 for a gas turbine engine is presented. The combustion system 100 comprises at least one measuring unit 103 configured for measuring a raw signal of a frequency spectrum of an error parameter of a combustion flame 102 burning in a combustion chamber 101 of the combustion system 100. The error parameter is adapted for determining a combustion error type. A by-pass filter 108 is adapted for extracting at least one predefined frequency from the raw signal is provided, so that the raw signal is decomposed.

The combustion system further comprises a counting unit 109 for counting a number of peaks of the at least one predefined frequency within the time span. A determining unit is adapted for determining an actual reference value by dividing the number of counted peaks by the time span.

The combustion system 100 further comprises a comparing unit 110 for comparing the actual reference value with a nominal reference value, wherein the nominal reference value is determined by dividing a predefined number of peaks of the at least one predefined frequency by the time span, so that the combustion error type is predictable if the actual reference value differs to the nominal reference value by a predefined amount.

For example, the comparing unit 110 compares for example the actual and nominal reference value, wherein a time series analysis of the counted peaks within the time span may be conducted based on a fractal dimension. Hence, a fractal time series as reference value may be determined. Furthermore, based on the determined fractal time series, a Hurst exponent may be determined. In an example, a typical nominal value (limit) under H (Hurst exponent) <0.5 would indicate that the system becomes unstable, H<0.3 could be used a warning trigger, whilst the H<0.15 may be used as a corrective action. Hence, if H<limit, corrective action would be done in step 111. If H>limit, no corrective action would be done in step 112 and the gas turbine operation would be continued.

Furthermore, the Figure shows a method according to the invention which can be conducted by the above described combustion system 100. The method is adapted for predicting a combustion error type (e.g. fretting) of the combustion flame 102 burning in the combustion chamber 101 of the combustion system 100 for a gas turbine engine. The method comprises the step of measuring a raw signal of a frequency spectrum of an error parameter (e.g. pressure, temperature) of the combustion flame 102 within a predefined time span, wherein the error parameter is adapted for determining the combustion error type. Furthermore, the method comprises an extracting at least one predefined frequency from the raw signal by using the by-pass filter 108, so that the raw signal is decomposed. In a further step, the number of peaks of the at least one predefined frequency range within the time span is counted. Furthermore, in a further step, an actual reference value is determined by dividing the number of counted peaks by the time span. Finally, in a further step, the actual reference value is compared with a nominal reference value, wherein the nominal reference value is determined by dividing a predefined number of peaks of the at least one predefined frequency by the time span, so that the combustion error type is predictable if the actual reference value differs to the nominal reference value.

The combustion chamber 101 of the combustion system 100 comprises an e.g. a pre-combustion zone and a main combustion zone. The combustion flame 102 occurs in the pre-combustion zone and the main combustion chamber. A fuel is split with a controllable pilot fuel/main fuel ratio into a pilot fuel mass flow within a pilot fuel line 107 and a main fuel mass within a main fuel line 106. The pilot fuel is injected at a pilot burner inside the pre-combustion chamber. The main fuel is injected together with the air through a swirler prior to the pre-combustion zone 101. The pilot fuel is generally richer fuel for maintaining and controlling a stable flame inside the combustion chamber 101. The main fuel is generally leaner than the pilot fuel in order to ensure an optimum burning characteristic, i.e. with low emissions, such as NOx.

Depending on e.g. the load of the gas turbine and the pilot fuel/main fuel ratio, combustion error types of the combustion flame may occur. A combustion error types may be for example resonant frequencies of the combustion flame 102 resulting in fretting of the combustion chamber or other hardware, or a blow out of the combustion flame.

Each combustion error type may be determined on its individual error parameter. In particular, an oscillation pattern of an error parameter (i.e. the frequency of the error parameter) may be indicative for a certain combustion error type.

The error parameter may be for example a combustion pressure of the combustion flame 102 or a combustion temperature of the combustion flame. In particular, the error parameter may be a pattern of hot spots of a combustion chamber wall heated by the combustion flame 102 within the combustion chamber 101, for example.

A predefined frequency of a raw signal of the error parameter is measured. A predefined frequency is extracted from the raw signal by using the by-pass filter 108, so that the raw signal is decomposed. Each error combustion error type can be detected on the basis of a specific predefined frequency extracted from a measured frequency spectrum of an error parameter. For example, if the error parameter is the pressure of the combustion flame 102, the oscillation of the pressure defines the predefined frequency spectrum. For example, if the error parameter is the location of temperature maxima of the combustion flame 102, the oscillation of the location of temperature maxima of the combustion flame defines the predefined frequency spectrum.

If e.g. fretting of the combustion flame 102 occurs, a certain behaviour (e.g. amplitude, frequency pattern etc.) of a specific predefined frequency of the frequency pattern exists. Specifically, a number of peaks within the time span of the predefined frequency are indicative of a behaviour of an combustion error type.

The actual reference value represents the peaks measured within a time span independently from any periodic behaviours of the frequency. A peak may be defined as a local maximum of a value of an amplitude of the predefined frequency. The value of the amplitude forming a local maximum may be defined in advance.

For example, if a value of the amplitude exceeds a predefined threshold value, each exceeding of the threshold value forms a peak to be counted. The peaks may be counted, if a local maximum of the amplitude is reached and the local maximum is above the threshold value. Each local maximum forming a peak is counted within the time span.

The nominal reference value represents the predefined number of peaks of an amplitude of a predefined within the time span. The nominal reference value refers to a number of peaks within the time span which are predetermined e.g. under laboratory conditions. The nominal reference value determines a threshold value, wherein a reference value below the nominal reference value is indicative of stable operation of the gas turbine, i.e. where the risk of occurrence of the respective combustion error type is low. A reference value above the nominal reference value is indicative of an instable operation of the gas turbine, i.e. where the risk of occurrence of the respective combustion error type increases rapidly or is high.

The nominal reference value may be stored in a data basis in a storage unit, for example. Furthermore, a plurality of nominal reference values for certain operating states and error parameter (e.g. pressure, temperature) may be stored and used to predict a combustion error type.

According to the invention, the respective combustion error type is predicted, if the actual reference value differs to the nominal reference value. For example, if the actual reference value exceeds the nominal reference value, a respective combustion error type is predicted. Furthermore, a range from the nominal reference value may be defined, so that a respective combustion error type is predicted if the actual reference value exceeds the nominal reference value by a predefined threshold value and/or by a predefined threshold time span.

By presenting the predefined frequency from the raw signal with an actual reference value, a typical behaviour of a combustion error type at an onset, i.e. at the start of the combustion error type is determinable and hence the combustion error type is better predictable.

A control parameter which is adapted for controlling the combustion flame error parameter of the combustion flame 102 is controlled so that the actual reference value meets the limit of the nominal reference value and so that the risk of a combustion error type is reduced.

The control parameter is for example a main fuel/pilot fuel split ratio injected into the combustion chamber 101 or a general mass flow of the fuel into the combustion chamber 101. The control parameter could also be a control of the amount of bleed of compressor air of the gas turbine, a control of the Variable Guide Vane (VGV) position of the gas turbine or engine speed of the gas turbine.

The above-described units, such as the counting unit 109, the comparing unit 110 and the determination unit may comprise a microprocessor for processing the received data.

The above described units 108, 109, 110 may be part of an (engine) control unit 104 of the combustion system 100. The control unit 104 accordingly conducts the steps of the above described method. Additionally, the control unit 104 controls e.g. the actions for driving the combustion chamber 101 and in particular to prevent combustion error types. Therefore, the control unit 104 may be connected to operating units, such as a fuel control unit 105, for example a controllable valve, which controls the fuel supply into the combustion chamber. In particular fuel control unit 105 controls the main fuel/pilot fuel ratio.

The measuring unit 103 may be for example a temperature sensor, a pressure sensor, an optical sensor and/or a sound sensor. In particular, the measuring unit 103 may comprise for example pressure sensors for measuring a pressure oscillation of the combustion flame or temperature sensors for measuring hot spots and a temperature pattern of the combustion flame 102. The temperature sensor measures the temperature of the hot products, i.e. the exhaust gas, inside the combustion chamber 101. The temperature sensor is for example arranged closed to or at the hottest location inside the combustion chamber 101 or is located further downstream of the combustion chamber 101.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: combustion system
- 101: combustion chamber
- 102: combustion flame
- 103: measuring unit
- 104: control unit
- 105: fuel control unit
- 106: main fuel line
- 107: pilot fuel line
- 108: by-pass filter
- 109: counting unit
- 110: comparing unit
- 111: correcting engine operation
- 112: continuing engine operation

## Claims

1. Method for predicting a combustion error type of a combustion flame (102) burning in a combustion chamber (101) of the combustion system (100) for a gas turbine engine, the method comprising
measuring a raw signal of an error parameter of the combustion flame (102) within a predefined time span, wherein the error parameter is adapted for determining the combustion error type,
extracting at least one predefined frequency range from the raw signal by using at least one by-pass filter (108), so that the raw signal is decomposed,
counting a number of peaks of the at least one predefined frequency within the time span,
determining an actual reference value by dividing the number of counted peaks by the time span,
comparing the actual reference value with a nominal reference value, wherein the nominal reference value is determined by dividing a predefined number of peaks of the at least one predefined frequency range by the time span, so that the combustion error type is predictable if the actual reference value differs to the nominal reference value.

2. Method according to claim 1,
wherein the combustion error type is fretting of a combustion flame (102), a blow out of the combustion flame (102) or a resonant frequency of the combustion flame (102).

3. Method according to claim 1 or 2,
wherein the error parameter is combustion pressure of a combustion flame (102) or a combustion temperature of the combustion flame (102).

4. Method according to one of the claims 1 to 3, further comprising
controlling a control parameter which is adapted for controlling the combustion flame error parameter of the combustion flame (102) so that the actual fractal time series meets the limit of the nominal fractal time series.

5. Method according to claim 3,
wherein the control parameter is a main fuel/pilot fuel ratio injected into the combustion chamber (101).

6. Combustion system for a gas turbine engine, the combustion system (100) comprising
measuring unit (103) configured for measuring a raw signal of an error parameter of a combustion flame (102) burning in a combustion chamber (101) of the combustion system (100) within a time span,
wherein the error parameter is adapted for determining a combustion error type,
a by-pass filter (108) for extracting at least one predefined frequency range from the raw signal, so that the raw signal is decomposed
a counting unit (109) for counting a number of peaks of the at least one predefined frequency range within the time span,
a determining unit for determining an actual reference value by dividing the number of counted peaks by the time span,
a comparing unit (110) for comparing the actual reference value with a nominal reference value, wherein the nominal reference value is determined by dividing a predefined number of peaks of the at least one predefined frequency range by the time span, so that the combustion error type is predictable if the actual reference value differs to the nominal reference value.
